# EUROPÄISCHE PATENTSCHRIFT

(11) **EP 2 287 593 B1**
(45) Veröffentlichungstag und Bekanntmachung des Hinweises auf die Patenterteilung: **04.10.2017**
(21) Anmeldenummer: 10008279.1
(22) Anmeldetag: 09.08.2010
(51) Int. Cl.: G01B 11/25, G01N 21/88

(54) **Vorrichtung und Verfahren zum optischen Inspizieren einer Oberfläche an einem Gegenstand**
Method and device for optical inspection of a surface on an object
Dispositif et procédé d'inspection optique d'une surface sur un objet

(30) Priorität: 20.08.2009 DE 102009038965
(43) Veröffentlichungstag der Anmeldung: 23.02.2011
(73) Patentinhaber: Carl Zeiss OIM GmbH, 73117 Wangen (DE)
(72) Erfinder: Knupfer, Klaus-Georg, 73457 Essingen (DE); Beck, Rolf, 73728 Esslingen (DE); Huss, Volker, 73079 Süßen (DE)
(74) Vertreter: Carl Zeiss AG - Patentabteilung

(56) Entgegenhaltungen:
- EP-A1- 0 076 866
- WO-A1-2009/083655
- US-A- 4 641 972
- US-A1- 2003 039 388

## Beschreibung

Die vorliegende Erfindung betrifft eine Vorrichtung zum optischen Inspizieren einer Oberfläche an einem Gegenstand. Sie betrifft insbesondere eine Vorrichtung und ein Verfahren, die eine weitgehend automatisierte und bevorzugt sogar vollautomatische Inspektion von zumindest teilweise glänzenden Oberflächen unter Industriebedingungen ermöglichen.

Bei der industriellen Fertigung von Produkten spielt die Produktqualität seit vielen Jahren eine zunehmend wichtige Rolle. Hohe Produktqualität kann einerseits durch entsprechend ausgelegte und stabile Fertigungsprozesse erreicht werden. Andererseits müssen die Qualitätsparameter eines Produktes möglichst zuverlässig und vollständig kontrolliert werden, um Qualitätsmängel frühzeitig zu erkennen. In vielen Fällen spielt die Qualität einer Produktoberfläche eine Rolle. Dabei kann es sich um dekorative Oberflächen handeln, wie beispielsweise Lackoberflächen bei Kraftfahrzeugen oder Haushaltsgegenständen, oder um technische Oberflächen, wie etwa die Oberflächen von fein bearbeiteten metallischen Kolben oder Lagerflächen.

Es gibt eine Vielzahl von Vorschlägen und Konzepten, um Oberflächen automatisiert zu inspizieren. Häufig sind die bekannten Verfahren und Vorrichtungen jedoch nur für einen speziellen Anwendungsfall einsetzbar, weil sie hohes a priori-Wissen über die zu inspizierende Oberfläche voraussetzen. Darüber hinaus sind die bekannten Verfahren und Vorrichtungen für viele Anwendungsfälle nicht ausgereift genug, um eine effiziente und zuverlässige Inspektion von Oberflächen unter Industriebedingungen zu ermöglichten. Industriebedingungen beinhaltet in diesem Fall die Einhaltung von definierten Zykluszeiten, die für eine Einbindung in eine industrielle Fertigung relevant sind, die Fähigkeit, die Oberflächeninspektion in einer Fertigungshalle mit wechselnden Temperaturen, Staub und Lärm durchzuführen, und/oder die Möglichkeit, die Oberflächeninspektion einfach und schnell an wechselnde Produkte anzupassen.

Infolgedessen wird beispielsweise in der Automobilindustrie bis heute in erheblichem Ausmaß eine visuelle Inspektion von Lackoberflächen durch erfahrene und geschulte Personen durchgeführt. Der Automatisierungsgrad bei der Inspektion von glänzenden Oberflächen ist wesentlich geringer als der Automatisierungsgrad in der Fertigung selbst.

Die Deflektometrie ist für zumindest teilweise reflektierende Oberflächen ein erfolgversprechendes Konzept, bei welchem ein Hell-Dunkel-Muster mit einer Kamera über die zu inspizierende Oberfläche aufgenommen und ausgewertet wird. Das Hell-Dunkel-Muster wird relativ zu der Oberfläche verschoben und die Oberfläche wird an mehreren Verschiebepositionen des Musters aufgenommen. Aufgrund der Veränderungen, welche die betrachteten Bereiche durch die Reflexion erfahren, ist es möglich, die reflektierende Oberfläche optisch zu inspizieren. Insbesondere kann die lokale Neigung eines Oberflächenpunktes aus zumindest drei Bilder bestimmt werden, die den Oberflächenpunkt mit verschiedenen Relativpositionen des Hell-Dunkel-Musters zeigen. Anhand der lokalen Neigung können Kratzer, Poren, Beulen, Lunker und andere dimensionelle Defekte erkannt werden. Auch Glanzgrad und Streueigenschaften der Oberfläche können mit Hilfe der Deflektometrie bestimmt werden. In diesem Zusammenhang gibt es Bedarf nach weiteren Verbesserungen von zugehörigen Vorrichtungen und Verfahren im Hinblick auf Messgeschwindigkeit, Zuverlässigkeit und Effizienz auch unter Industriebedingungen.

US 4,641,972 A zeigt eine Vorrichtung zum optischen Inspizieren einer Oberfläche, wobei zueinander phasenverschobene Hell-Dunkel-Muster erzeugt und mit einer Kamera aufgenommen werden.

WO 2009/083655 A1 und EP 0076866 A1 zeigen jeweils eine Vorrichtung zum optischen Inspizieren einer Oberfläche an einem Gegenstand, wobei drei zueinander phasenverschobene Streifenmuster gleichzeitig erzeugt werden. Jedes Streifenmuster hat eine jeweils andere Farbe. Eine Kamera nimmt Bilder auf, welche jeweils einen Abschnitt der Oberfläche zeigen.

Es ist eine Aufgabe der vorliegenden Erfindung, eine Vorrichtung anzugeben, die eine schnelle und zumindest weitgehend automatisierte Inspektion von Gegenständen mit zumindest teilweise reflektierenden Oberflächen unter Industriebedingungen ermöglichen. Es ist wünschenswert, dass die Vorrichtung kostengünstig und verschleißarm realisiert werden kann und dass das Verfahren und die Vorrichtung flexibel an verschiedene Oberflächen und/oder Gegenstände angepasst werden können.

Diese Aufgabe wird gemäß einem Aspekt der Erfindung durch eine Vorrichtung zum optischen Inspizieren einer Oberfläche an einem Gegenstand gemäß Anspruch 1 gelöst, wobei die Oberfläche eine Vielzahl von Oberflächenpunkten besitzt, die entlang einer Richtung verteilt sind, mit
einem Mustergenerator, der dazu ausgebildet ist, variable Hell-Dunkel-Muster zu erzeugen, mit einer Kamera zum Aufnehmen von Bildern, die jeweils nur einen Teilabschnitt der Oberfläche zeigen, mit einer Werkstückaufnahme, die dazu ausgebildet ist, den Gegenstand relativ zu der Kamera in der Richtung zu bewegen, um die Oberflächenpunkte zeitlich nacheinander mit der Kamera zu erfassen, und mit einer Steuer- und Auswerteeinheit, die dazu ausgebildet ist, den Mustergenerator, die Workstückaufnahme und die Kamera so anzusteuern, dass jeder Oberflächenpunkt aus der Vielzahl der verteilten Oberflächenpunkte mit einer Vielzahl verschiedener Hell-Dunkel-Muster aufgenommen wird, wobei der Mustergenerator die verschiedenen Hell-Dunkel-Muster in einer zusammenhängenden zeitlichen Abfolge bereitstellt, und wobei die Kamera während der zusammenhängenden zeitlichen Abfolge stets auf den gleichen Oberflächenpunkt gerichtet ist, wobei die Hell-Dunkel-Muster jeweils einen Intensitätsverlauf mit einer definierten und jeweils gleichen Periode aufweisen, wobei mindestens drei Hell-Dunkel-Muster der Abfolge den gleichen Intensitätsverlauf besitzen, und wobei die drei Hell-Dunkel-Muster sich dadurch unterscheiden, dass der Intensitätsverlauf mit jeweils unterschiedlichen Phasenlagen angeordnet ist.

Gemäß einem weiteren Beispiel wird die Aufgabe durch ein Verfahren zum optischen Inspizieren einer Oberfläche an einem Gegenstand gelöst, wobei die Oberfläche eine Vielzahl von Oberflächenpunkten besitzt, die entlang einer Richtung verteilt sind, mit den Schritten: Positionieren des Gegenstandes im Aufnahmebereich einer Kamera, die nur einen Teilabschnitt der Oberfläche erfasst, Erzeugen einer Vielzahl von verschiedenen Hell-Dunkel-Mustern mit Hilfe eines Mustergenerators, wobei die einzelnen Hell-Dunkel-Muster auf den Teilabschnitt fallen, Bewegen des Gegenstands relativ zu der Kamera in der Richtung, um die Oberflächenpunkte zeitlich nacheinander in dem Aufnahmebereich anzuordnen, und Aufnehmen einer Vielzahl von Bildern, die die Oberflächenpunkte mit den Hell-Dunkel-Mustern zeigen, wobei jeder Oberflächenpunkt aus der Vielzahl der verteilten Oberflächenpunkte mit einer Vielzahl verschiedener Hell-Dunkel-Muster aufgenommen wird, wobei der Mustergenerator die verschiedenen Hell-Dunkel-Muster in einer zusammenhängenden zeitlichen Abfolge bereitstellt, und wobei die Kamera während der zusammenhängenden zeitlichen Abfolge stets auf den gleichen Oberflächenpunkt gerichtet ist, wobei die Hell-Dunkel-Muster jeweils einen Intensitätsverlauf mit einer definierten und jeweils gleichen Periode aufweisen, wobei mindestens drei Hell-Dunkel-Muster der Abfolge den gleichen Intensitätsverlauf besitzen, und wobei die drei Hell-Dunkel-Muster sich dadurch unterscheiden, dass der Intensitätsverlauf mit jeweils unterschiedlichen Phasenlagen angeordnet ist.

Die neue Vorrichtung verwendet einen Mustergenerator, der in der Lage ist, verschiedene Hell-Dunkel-Muster variabel zu erzeugen. Der Mustergenerator kann ein LCD-Monitor oder ein Beamer sein, der variable Hell-Dunkel-Muster auf eine Mattscheibe projiziert. In einer bevorzugten Ausführungsform, das weiter unten näher erläutert ist, weist der Mustergenerator jedoch eine Vielzahl von einzelnen Lichtquellen auf, insbesondere Leuchtdioden oder andere punktförmige Lichtquellen, die von der Steuer- und Auswerteeinheit einzeln oder in kleinen Gruppen individuell in ihrer Lichtintensität angesteuert werden. Vorzugsweise bilden die Lichtquellen in diesem Fall eine Matrix mit getrennt ansteuerbaren Zeilen und Spalten.

Die Eigenschaften und Details der einzelnen Hell-Dunkel-Muster können durch geeignete Ansteuerung somit flexibel gewählt und geändert werden. Vorzugsweise werden Hell-Dunkel-Muster in Form von Streifenmustern, bestehend aus helleren und dunkleren Streifen, erzeugt. Es können auch Streifen mit unterschiedlicher Richtung einander überlagert sein, so dass insgesamt ein schachbrettartiges Rautenmuster entsteht. Die Hell-Dunkel-Muster beinhalten mindestens einen Intensitätsverlauf, d.h. eine vom Ort abhängige Lichtintensität, mit einer definierten Periode. Bei einem Streifenmuster ergibt sich dieser Intensitätsverlauf quer zur Streifenrichtung. Es ist denkbar, dass innerhalb eines Hell-Dunkel-Musters mehrere Streifenmuster überlagert sind, so dass das Hell-Dunkel-Muster mehrere unterschiedliche Intensitätsverläufe und Perioden besitzt. Besonders bevorzugt ist ein sinusförmiger Intensitätsverlauf, bei dem sich die Lichtintensität des Hell-Dunkel-Musters entlang einer Richtung sinusförmig ändert

Die Vorrichtung beinhaltet eine Werkstückaufnahme, die den Gegenstand so positioniert, dass die Hell-Dunkel-Muster auf die Oberfläche oder zumindest einen Teilabschnitt davon fallen. Des weiteren ist eine Kamera mit einem Aufnahmebereich vorgesehen, der auf einen Teilabschnitt der zu inspizierenden Oberfläche gerichtet ist.

Die Werkstückaufnahme ist dazu ausgebildet, den zu inspizierenden Gegenstand relativ zu der Kamera zu bewegen, so dass die Kamera verschiedene Oberflächenpunkte der Oberfläche zeitlich nacheinander mit ihrem Aufnahmebereich erfasst. Eine solche Realisierung besitzt den Vorteil, dass Gegenstände weitgehend unabhängig von ihrer Größe mit der neuen Vorrichtung inspiziert werden können. Besonders vorteilhaft ist diese Realisierung zur Oberflächeninspektion von sehr langen Gegenständen, wie etwa Stranggussprofilen. Die Steuer- und Auswerteeinheit erzeugt mit Hilfe des Mustergenerators eine zeitliche Abfolge verschiedener Hell-Dunkel-Muster, d.h, eine Musterfolge. Die verschiedenen Hell-Dunkel-Muster unterscheiden sich insbesondere in Bezug auf die Phasenlage des Intensitätsverlaufs und/oder in Bezug auf die Breite und Richtung der einzelnen Streifen. Die Musterfolge wird innerhalb eines zusammenhängenden Zeitraums erzeugt, in dem die Kamera durchgehend auf einen zu inspizierenden Oberflächenpunkt gerichtet ist. Mit anderen Worten werden zeitlich nacheinander mehrere Bilder für jeden zu inspizierenden Oberflächenpunkt aufgenommen, wobei die Bilder den Oberflächenpunkt mit jeweils einem anderen Muster der Musterfolge zeigen. Einerseits wird der Gegenstand relativ zu der Kamera bewegt, um die räumlich verteilten Oberflächenpunkte zeitlich nacheinander aufzunehmen. Andererseits wird jedoch eine Vielzahl von Bildern für jeden Oberflächenpunkt in direkter zeitlicher Abfolge aufgenommen. In den bevorzugten Ausführungsformen wird jeder Oberflächenpunkt genau einmal an der Kamera vorbeigeführt und es werden alle benötigten Bilder der Musterfolge direkt hinter einander aufgenommen. Die neue Vorrichtung besitzt den Vorteil, dass die Oberfläche nur einmal relativ zu der Kamera positioniert werden muss. Dies ist vorteilhaft gegenüber alternativen Verfahren, bei denen zunächst alle Abschnitte der Oberfläche mit einem einzelnen Hell-Dunkel-Muster aufgenommen werden und bei denen die Abschnitte anschließend erneut im Aufnahmebereich der Kamera angeordnet werden müssen, um Bilder mit einem zweiten Hell-Dunkel-Muster aufzunehmen. Das neue Verfahren und die neue Vorrichtung gewährleisten, dass alle Bilder, die mit verschiedenen Hell-Dunkel-Mustern aufgenommen wurden, unter gleichen geometrischen Verhältnissen aufgenommen werden. Infolge dessen "passen" die Bilder mit den verschiedenen Hell-Dunkel-Mustern sehr genau zueinander, auch wenn der mechanische Antrieb zum Bewegen des Gegenstandes nur eine relativ mäßige Positioniergenauigkeit aufweist. Dies ist besonders vorteilhaft, wenn Oberflächeneigenschaften mit Hilfe der phasenschiebenden Deflektometrie bestimmt werden sollen, etwa um die lokale Neigung der Oberfläche an einem Oberflächenpunkt zu bestimmen. Ein solches Verfahren setzt voraus, dass ein definiertes Hell-Dunkel-Muster mit hoher Genauigkeit relativ zu dem zu inspizierenden Oberflächenpunkt verschoben wird. Die Relativverschiebung zwischen Muster und Oberfläche wird hier auf "elektronischem Wege" erzeugt, indem der Mustergenerator mehrere Muster erzeugt, die eine virtuelle Verschiebung eines definierten Hell-Dunkel-Musters repräsentieren. Mit dem neuen Verfahren und der neuen Vorrichtung lassen sich Positionierungsfehler zwischen Muster und Oberfläche und daraus folgende Messungenauigkeiten auf einfache und effiziente Weise reduzieren. Andererseits kann aufgrund der "echten" räumlichen Bewegung zwischen dem Gegenstand und der Kamera eine sehr große Oberfläche sehr schnell und genau inspiziert werden.

Die räumliche Bewegung des Gegenstandes dient hier also in erster Linie dazu, eine relativ große Oberfläche möglichst vollständig abzutasten. Hingegen wird die Verschiebung eines definierten Musters relativ zu einem zu inspizierenden Oberflächenpunkt nicht durch die tatsächliche räumliche Bewegung der Oberfläche, sondern mit Hilfe verschiedener Muster der Musterfolge realisiert.

Gemäß der Erfindung weisen die Hell-Dunkel-Muster jeweils einen Intensitätsverlauf mit einer definierten und jeweils gleichen Periode auf, wobei mindestens drei Hell-Dunkel-Muster der Abfolge den gleichen Intensitätsverlauf besitzen, und wobei die drei Hell-Dunkel-Muster sich dadurch unterscheiden, dass der Intensitätsverlauf mit jeweils unterschiedlichen Phasenlagen angeordnet ist.

Die mindestens drei Hell-Dunkel-Muster sind strukturell gleich. Vorzugsweise handelt es sich bei den Hell-Dunkel-Mustern um Streifenmuster mit abwechselnden hellen und dunklen Streifen, die einen sinusförmigen Intensitätsverlauf bilden und jeweils eine gleiche Streifenbreite besitzen. Die zumindest drei Hell-Dunkel-Muster unterscheiden sich hier nur durch ihre Lage relativ zu dem zu inspizierenden Oberflächenabschnitt. Mit anderen Worten ist jedes der Hell-Dunkel-Muster relativ zu dem vorhergehenden Hell-Dunkel-Muster der Abfolge verschoben, und zwar bevorzugt in Richtung des Intensitätsverlaufs. Die unterschiedlichen Lagen sind vorzugsweise so gewählt, dass die zumindest drei Muster eine ganze Periode des Intensitätsverlaufs durchlaufen. Durch Verwendung solcher Hell-Dunkel-Muster wird der Effekt erzielt, dass aus Sicht der Kamera nur ein Hell-Dunkel-Muster relativ zu der Oberfläche verschoben wird. Diese relative Verschiebung ermöglicht eine sehr genaue Oberflächeninspektion mit Hilfe der phasenschiebenden Deflektometrie. Vorteil ist, dass das Muster hier "virtuell" relativ zu dem Gegenstand bewegt wird. Messungenauigkeiten infolge von Positionsfehlern, wie sie bei einer mechanischen Relativbewegung zwischen Muster und Gegenstand auftreten können, werden wirkungsvoll reduziert.

Insgesamt ermöglicht die neue Vorrichtung eine automatisierte, schnelle, flexible und genaue Oberflächeninspektion an verschiedenen Gegenständen. Die Vorrichtung kann aufgrund des variabel ansteuerbaren Mustergenerators sehr einfach und schnell an wechselnde Inspektionsaufgaben angepasst werden. Die oben genannte Aufgabe ist daher vollständig gelöst.

In einer bevorzugten Ausführungsform weist der Mustergenerator eine Vielzahl von separaten Lichtquellen aufweist, die einzeln oder in kleinen Gruppen ansteuerbar sind.

Ein solcher Mustergenerator ermöglicht sehr schnelle Musterwechsel. Gemäß einer weiteren Ausführungsform der Erfindung erfolgt der Musterwechsel mit einer Frequenz im kHz-Bereich, beispielsweise mit einer Frequenz im Bereich von 1kHz bis 20 kHz, bevorzugt 10 kHz. Demgegenüber liegt die Musterwechselgeschwindlgkeit, die sich mit einem herkömmlichen LC-Display oder Beamer typischerweise erreichen lässt, im Bereich zwischen 50 Hz und 100 Hz. Die Musterwechsel erfolgen bei einer solchen Ausführungsform so schnell, dass die einzelnen Muster der Musterfolge mit dem Auge gar nicht erkannt bzw. voneinander unterschieden werden können. Ein Betrachter sieht vielmehr eine graue Fläche. Diese Ausführungsform ermöglicht eine sehr schnelle Inspektion, eine hohe Lichtintensität und einen hohen Hell-Dunkel-Kontrast. Die beiden zuletzt genannten Eigenschaften vereinfachen die Oberflächeninspektion an verschiedenen hellen und dunklen Gegenständen.

In einer weiteren Ausfiihrungsfonn ist der Mustergenerator ortsfest angeordnet.

Bei dieser Ausführungsform steht der Mustergenerator stationär im Raum. Der Gegenstand wird relativ zu dem Mustergenerator bewegt, um die Teilabschnitte der Oberfläche zu positionieren. Die stationäre Anordnung ermöglicht eine einfache Montage und Kühlung, insbesondere bei Verwendung von separaten Lichtquellen. Es können alle notwendigen Versorgungs- und Steuerungsleitungen auf kostengünstige Weise verlegt werden. Aulserdem sind die vorhandenen Lichtverhältnisse leichter kontrollierbar.

In einer weiteren Ausführungsform ist die Kamera ortsfest angeordnet.

Bei dieser Ausführungsform ist (auch) die Kamera stationär im Raum angeordnet. Bevorzugt ist die Kamera in einer festen Relation und Ausrichtung zu dem Mustergenerator angeordnet. Auch dies vereinfacht die Montage und Kontrolle der Licht- und Positionsverhältnisse beim Aufnehmen der Bilder. Zudem ist die Kamera besser vor Beschädigungen durch mechanische Bewegungen geschützt.

In einer besonders bevorzugten Ausführungsform ist die Kamera eine Zeilenkamera.

Bei dieser Ausführungsform besitzt die Kamera eine Anzahl von lichtempfindlichen Pixeln, die in einer "eindimensionalen" Zeile aneinander gereiht sind. Vorzugsweise beinhaltet die Kamera genau eine solche Pixelzeile. Im Gegensatz dazu könnte die neue Vorrichtung in anderen Ausführungsformen mit einer Kamera mit einer matrixartigen, zweidimensionalen Anordnung von Pixeln realisiert sein. In der bevorzugten Ausführungsform nimmt die Kamera die Oberfläche lediglich zeilenweise auf. Dies ermöglicht ein sehr schnelles Auslesen der Pixelinformationen (mit einer Auslesefrequenz von bis zu 20 kHz) und damit eine hohe Bildaufnahmegeschwindigkeit. Zudem können perspektivische Verzerrungen bei stark gekrümmten Oberflächen einfacher beherrscht werden. Beispielsweise kommt dieser Vorteil bei der Inspektion eines zylinderförmigen Gegenstandes gut zur Geltung, wenn die Kamerazeile parallel zu der Zylinderachse des Gegenstandes angeordnet wird, so dass jeweils nur ein kleiner Teil der Manteloberfläche erfasst wird. Durch Drehen des zylinderförmigen Gegenstandes kann dann der gesamte Zylindermantel abschnittsweise mit der Zeilenkamera aufgenommen werden. Jeder Abschnitt wird mit gleichen perspektivischen Verhältnissen und gleichen Lichtverhältnissen aufgenommen.

Bei einer weiteren Ausführungsform ist die Steuer- und Auswerteeinheit dazu ausgebildet ist, eine lokale Oberflächenneigung an dem einem Oberflächenpunkt in Abhängigkeit von den Bildern zu bestimmen.

Diese Ausführungsform macht von den Möglichkeiten der neuen Vorrichtung vorteilhaften Gebrauch. Mit Hilfe der phasenschiebenden Deflektometrie lässt sich die lokale Oberflächenneigung an einem zu inspizierenden Oberflächenpunkt bestimmen. Mit Hilfe der lokalen Oberflächenneigung können sehr kleine Kratzer, Lunker und andere sehr kleine Oberflächendefekte sehr gut detektiert werden.

Bei einer weiteren Ausführungsform besitzen mindestens zwei der Hell-Dunkel-Muster der Abfolge unterschiedliche Intensitätsverläufe mit unterschiedlichen Perioden.

Bei dieser Ausführungsform sind zumindest zwei Hell-Dunkel-Muster der Abfolge strukturell unterschiedlich ausgebildet. Insbesondere unterscheiden sich die Hell-Dunkel-Muster in Bezug auf die Orientierung der Intensitätsverläufe und/oder deren Perioden. Im Falle von Streifenmustern besitzt dann bspw. eines der Hell-Dunkel-Muster breitere Streifen als das andere Hell-Dunkel-Muster. Dies hat den Vorteil, dass zusätzliche Eigenschaften, wie insbesondere Streueigenschaften und Glanzgrad der Oberfläche, einfacher bestimmt werden können. Ferner können durch Variieren der Periode der Hell-Dunkel-Muster glänzende und mattere Oberflächen auf unterschiedliche Weise inspiziert werden. So ist es von Vorteil, wenn matte Oberflächen mit breiteren Streifen, also mit längeren Perioden, und stark glänzende Oberflächen mit dünneren Streifen, also kürzeren Perioden, inspiziert werden. Dies folgt daraus, dass spiegelnde Oberflächen eine geringe Streuung aufweisen und dünne Streifen gut erkennbar für die Kamera reflektiert werden. Matte Oberflächen streuen die Streifen stark und "verschmieren" dünne Streifen für die Kamera, wohingegen breite Streifen gut erfasst werden.

Besonders vorteilhaft ist es, wenn die letztgenannte Ausführungsform mit der davor genannten Ausführungsform kombiniert wird, so dass sich in einer Abfolge sowohl Hell-Dunkel-Muster mit unterschiedlichen Intensitätsverläufen als auch Hell-Dunkel-Muster mit gleichen Intensitätsverläufen unterschiedlicher Phasenlagen befinden. Auf diese Weise können unterschiedlich streuende Oberflächen auf sehr einfache und effiziente Weise inspiziert werden.

Bei einer weiteren Ausführungsform ist die Steuer- und Auswerteeinheit dazu ausgebildet, die Werkstückaufnahme anzusteuern, um den Gegenstand während der Abfolge der Hell-Dunkel-Muster zu bewegen.

Bei dieser Ausführungsform wird der Gegenstand bewegt, während die Abfolge der Hell-Dunkel-Muster erzeugt wird. Dementsprechend nimmt der Gegenstand von einem Muster der Abfolge zum nächsten eine geringfügig verschobene Position relativ zu den Mustern ein. Die geometrischen Verhältnisse zwischen Kamera, Gegenstand und Muster sind nicht mehr für alle Bilder identisch. Überraschenderweise hat sich gezeigt, dass auch mit dieser Ausführungsform eine auswertbare Bildfolge aufgenommen werden kann, wenn die Bewegungsgeschwindigkeit des Gegenstandes klein ist im Vergleich zu der Wechselgeschwindigkeit der Hell-Dunkel-Muster und klein im Vergleich mit der Bildaufnahmegeschwindigkeit der Kamera. Die Ausführungsform ermöglicht eine gleichmäßige Drehung des Gegenstandes mit geringen Vibrationen und Gleichlaufschwankungen sowie eine sehr schnelle Bildaufnahme.

Bei einer weiteren Ausführungsform, ist die Steuer- und Auswerteeinheit dazu ausgebildet, die Werkstückaufnahme kontinuierlich anzusteuern, um den Gegenstand kontinuierlich zu bewegen.

Bei dieser Ausführungsform wird eine zumindest weitgehend stetige Bewegung beim Inspizieren der Oberfläche verwendet. Dies schließt nicht aus, dass ein Schrittmotor zum Erzeugen der Bewegung verwendet wird, sofern die Schrittweite und Schrittfolge eine weitgehend stetige Bewegung hervorrufen. Die Ausführungsform ermöglicht eine sehr einfache und kostengünstige Realisierung sowie eine einfache Integration in industrielle Produktionsabläufe.

Es versteht sich, dass die vorstehend genannten und die nachstehend noch zu erläuternden Merkmale nicht nur in der jeweils angegebenen Kombination, sondern auch in anderen Kombinationen oder in Alleinstellung nach einem der Ansprüche 1 bis 6 verwendbar sind, ohne den Rahmen der vorliegenden Erfindung zu verlassen.

Ausführungsformen der Erfindung nach einem der Ansprüche 1 bis 6 sind in der Zeichnung dargestellt und werden in der nachfolgenden Beschreibung näher erläutert. Es zeigen:
- Fig. 1: eine perspektivische Darstellung einer bevorzugten Ausführungsform der neuen Vorrichtung;
- Fig. 2: eine vereinfachte geschnittene Seitenansicht der Vorrichtung aus Fig. 1;
- Fig. 3: eine vereinfachte Draufsicht auf die Vorrichtung aus Fig. 1;
- Fig. 4: eine schematische Darstellung der Positionen mehrerer Abschnitte der Oberfläche zu einem bestimmten Zeitpunkt;
- Fig. 5: eine schematische Darstellung von sechs Bildern, die drei Abschnitte der Oberfläche mit verschiedenen Hell-Dunkel-Mustern zeigen; und
- Fig. 6: eine weitere schematische Darstellung von sechs Bildern gemäß einer bevorzugten Ausführungsform.

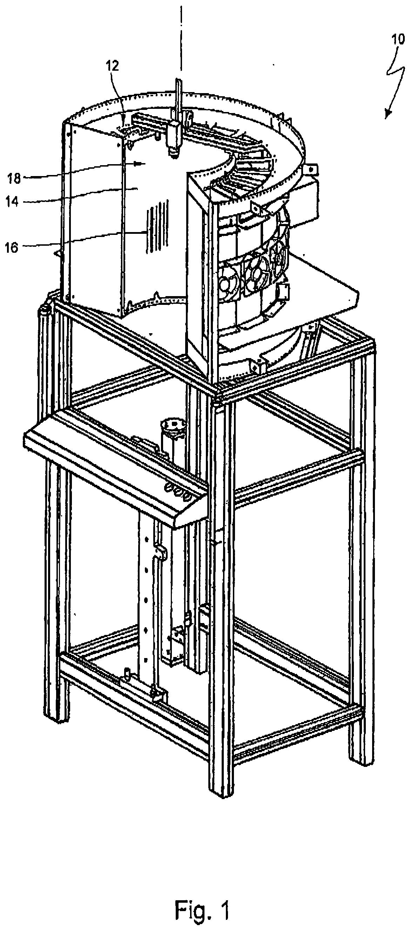

In den Figuren 1 bis 3 ist eine bevorzugte Ausführungsform der neuen Vorrichtung in seiner Gesamtheit mit der Bezugsziffer 10 bezeichnet. Die Vorrichtung 10 ist hier in Form eines "stehenden" Tunnels bzw. in Form einer Säule mit einem vertikalen, tunnelförmigen Inspektionsraum realisiert. Abweichend hiervon kann die Vorrichtung 10 in anderen Ausführungsformen mit einem "liegenden" Tunnel oder mit einem offenen Inspektionsbereich realisiert sein, durch den die zu inspizierenden Gegenstände geführt werden.

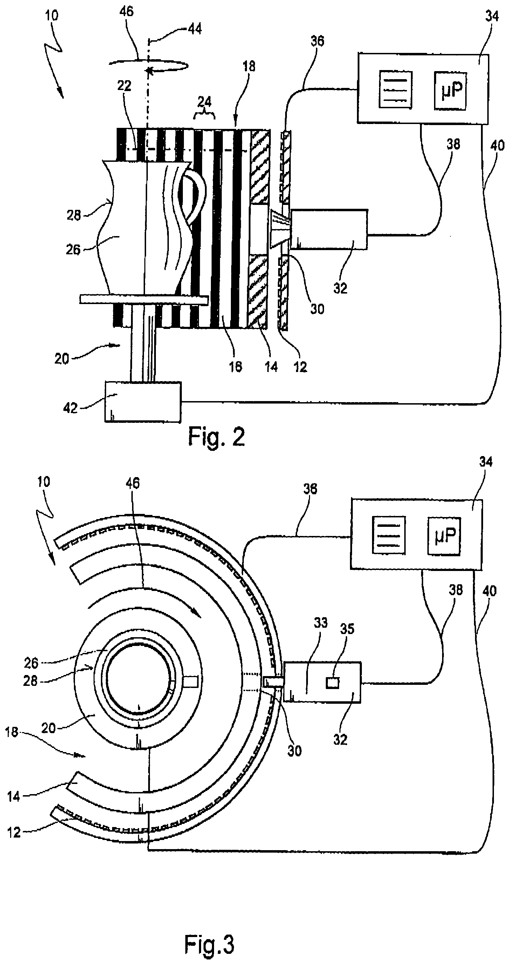

In Fig. 1 besitzt die Vorrichtung 10 einen Mustergenerator mit einer Vielzahl von separaten Lichtquellen 12, die hier hinter einer Mattscheibe 14 angeordnet sind. Die Lichtquellen 12 sind ortsfest und matrixartig entlang eines gedachten Zylindermantelaussehnitts angeordnet. In einer Draufsicht ergibt sich für die Anordnung der Lichtquellen 12 eine C-förmige Grundform (siehe Fig. 3). Die Lichtquellen 12 strahlen auf die Mattscheibe 14 und erzeugen in Abhängigkeit von ihrer Intensität auf der Mattscheibe 14 ein definiertes Hell-Dunkel-Muster 16. Das Hell-Dunkel-Muster 16 ist hier aus Gründen der Übersichtlichkeit nur teilweise dargestellt. Die Lichtquellen 12 definieren hier einen Inspektionsraum 18, der dem Innenbereich des gedachten Zylindermantelausschnitts entspricht.

Fig. 2 und 3 zeigen eine Darstellung der Vorrichtung 10 in einer Seitenansicht und in einer Draufsicht. Der Inspektionsraum 18 ist in einer Schnittdarstellung gezeigt, so dass sich ein Teil des Hell-Dunkel-Musters 16 erkennen lässt. Unterhalb des Inspektionsraums 18 ist eine Werkstückaufnahme 20 angeordnet, die in vertikaler Richtung verfahrbar ist. Alternativ oder ergänzend könnte die Werkstückaufnahme in horizontaler Richtung verfahrbar sein. Letzteres ist bei einem "liegenden Tunnel" oder einem offenen Inspektionsbereich bevorzugt, über dem der Mustergenerator angeordnet sein kann. Mit der Werkstückaufnahme kann ein Gegenstand außerhalb des Inspektionsraums mit der Werkstückaufnahme 20 aufgenommen und in den Inspektionsraum 18 transportiert werden.

Das Hell-Dunkel-Muster 16 auf der Mattscheibe 14 beinhaltet einen Intensitätsverlauf 22, der hier mit einer strichpunktierten Linie angedeutet ist. Das dargestellte Hell-Dunkel-Muster 16 ist ein Streifenmuster mit vertikal verlaufenden Streifen und einem horizontal verlaufenden Intensitätsverlauf 22. Entlang dieses Intensitätsverlaufs 22 besitzt das Hell-Dunkel-Muster 16 eine definierte Periode 24. Die Periode 24 des Intensitätsverlaufs 22 erstreckt sich hier quer zu den Streifen über jeweils einen hellen und einen dunklen Streifen.

Das dargestellte Hell-Dunkel-Muster 16 ist eine mögliche Ausführungsform für ein Hell-Dunkel-Muster 16. In weiteren Ausführungsformen kommen Hell-Dunkel-Muster zur Anwendung, die andere Streifenrichtuttgen und/oder andere Perioden aufweisen. Vorteilhafte Hell-Dunkel-Muster können überlagerte Streifen mit mehreren verschiedenen Intensitätsverläufen beinhalten, wobei die mehreren Intensitätsverläufe mit unterschiedliche Orientierungen (entsprechend unterschiedlicher Streifenrichtungen) und/oder unterschiedliche Perioden haben. Beispielsweise können zwei Streifenmuster als Hell-Dunkel-Muster eingesetzt werden, die einander überlagert sind und deren Intensitätsverläufe quer zueinander verlaufen. In einem solchen Fall kann sich ein Rautenmuster mit hellen Rauten und dunkleren Zwischenbereichen ergeben.

Auf der Werkstückaufnahme 20 ist ein Gegenstand 26 mit einer Oberfläche 28 angeordnet. Die Oberfläche 28 soll hier mit der Vorrichtung 10 optisch inspiziert werden.

Die Mattscheibe 14 ist im Schnitt dargestellt. Sie besitzt hier eine Öffnung 30, vorzugsweise in Form eines vertikalen Schlitzes, die im Bereich des Hell-Dunkel-Musters 16 (hier etwa in der Mitte) angeordnet ist. Durch die Öffnung 30 erfasst eine Zeilenkamera 32 einen schmalen Teilabschnitt der Oberfläche 28. Die Zeilenkamera 32 ist hier ortsfest angeordnet. Eine Steuer- und Auswerteeinheit 34 ist über eine Leitung 36 mit den Lichtquellen 12 verbunden. Über die Leitung 36 steuert die Steuer- und Auswerteeinheit 34 die Intensität der Lichtquellen 12 derart, dass die Lichtquellen zeitlich nacheinander verschiedene Hell-Dunkel-Muster 16 auf der Mattscheibe 14 erzeugen. Die Lichtquellen 12 werden hier einzeln in ihrer Lichtintensität so angesteuert, dass helle Bereiche des Hell-Dunkel-Musters 16 durch eine hohe Lichtintensität der Lichtquellen 12 und dunkle Bereiche des Hell-Dunkel-Musters 16 durch eine niedrige Lichtintensität (bis hin zur Lichtintensität Null) der Lichtquellen 12 erzeugt werden. In einigen Ausführungsformen sind die Lichtquellen 12 LEDs, die in kleinen Vierergruppen angesteuert werden.

Die Kamera 32 ist hier als digitale Zeilenkamera 32 ausgebildet. Sie besitzt einen Verschluss 33 und einen Bildsensor 35 mit einer Zeile von lichtempfindlichen Pixeln. Der Bildsensor 35 erzeugt bei geöffnetem Verschluss 33 Bilddaten für jeweils ein Bild. Die Steuer- und Auswerteeinheit 34 ist über eine Leitung 38 mit der Zeilenkamera 32 verbunden. Über die Leitung 38 wird einerseits der Verschluss 33 gesteuert und zum anderen werden die Pixelinformationen als Bilddaten von der Zeilenkamera 32 an die Steuer- und Auswerteeinheit 34 übertragen. Die Zeitspanne zwischen dem Öffnen und dem Schließen des Verschlusses 33 bestimmt die Belichtungszeit der Zeilenkamera 32.

Die Steuer- und Auswerteeinheit 34 ist über eine Leitung 40 mit der Werkstückaufnahme 20 verbunden. Die Werkstückaufnahme 20 besitzt hier einen Schrittmotor 42, der über die Leitung 40 von der Steuer- und Auswerteeinheit 34 angesteuert wird. Mit dem Schrittmotor 42 kann die Werkstückaufnahme 20 um die Drehachse 44 in Drehrichtung 46 gedreht werden. Auf diese Weise wird der Gegenstand 26 und damit die Oberfläche 28 relativ zu der Zeilenkamera 32 bewegt. Darüber hinaus kann die Steuer- und Auswerteeinheit 34 die Werkstückaufnahme 20 hier auch parallel zur Drehachse 44 in vertikaler Richtung verfahren, um einen Gegenstand 26 von unten in den Inspektionsraum 18 zu befördern.

Die Zeilenkamera 32 unterscheidet sich von einer (prinzipiell ebenfalls möglichen) Matrixkamera dadurch, dass sie lediglich einen sehr schmalen Aufnahmebereich in der Drehrichtung 46 besitzt. Parallel zur Drehachse 44 weist die Zeilenkamera 32 demgegenüber einen großen Aufnahmebereich auf. In bevorzugten Ausführungsformen ist der Aufnahmebereich der Zeilenkamera parallel zur Drehachse 44 so groß, dass die Oberfläche 28 in Richtung der Drehachse 44 möglichst vollständig erfasst wird. In Drehrichtung hingegen wird zu einem definierten Zeitpunkt jeweils nur ein kleiner Abschnitt der Oberfläche 28 von der Zeilenkamera 32 erfasst. Durch Drehen des Gegenstandes 26 mittels der Werkstückaufnahme 20 in Drehrichtung 46 werden verschiedene Abschnitte der Oberfläche zeitlich nacheinander in dem Aufnahmebereich der Zeilenkamera 32 positioniert. Auf diese Weise kann die Zeilenkamera 32 trotz ihres engen Aufnahmebereichs große Teile der Oberfläche 28 oder auch die gesamte Oberfläche 28 aufnehmen.

Fig. 3 zeigt die Vorrichtung 10 in Draufsicht. Es wird deutlich, dass der Inspektionsraum 18 hier einen weitgehend C-förmigen Querschnitt besitzt und das Muster 16 entlang eines Zylindermantelausschnitts angeordnet ist. In anderen Ausführungsformen kann der Inspektionsraum 18 eine andere Form und/oder Ausdehnung haben. Beispielsweise ist auch ein rechteckiger oder trapezförmiger Querschnitt möglich. Darüber hinaus kann die Anordnung der Lichtquellen 12 prinzipiell auch eine ebene Musterfläche sein.

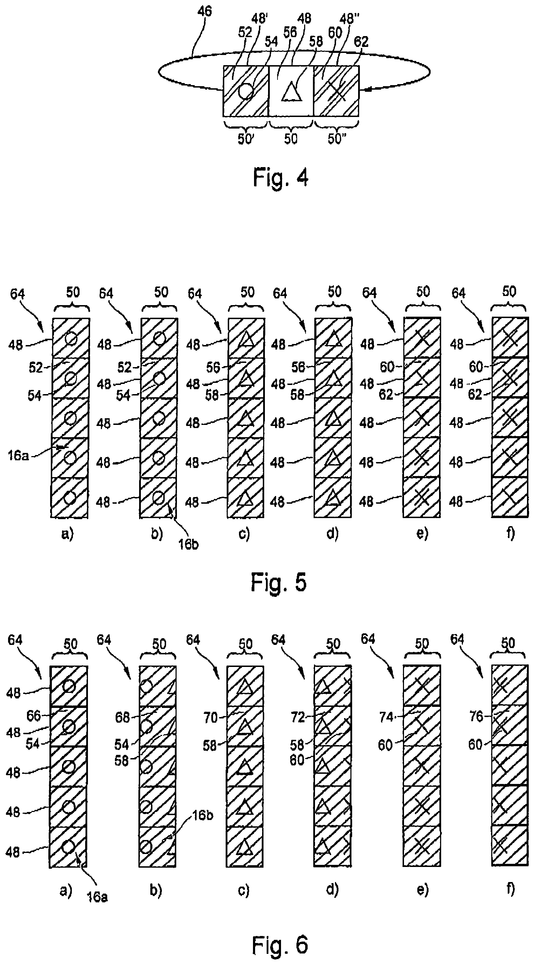

Fig. 4 zeigt eine schematische Darstellung zur Erläuterung des neuen Verfahrens. Die Zeilenkamera 32 besitzt eine Vielzahl von Pixeln 48, die in der bevorzugten Ausführungsform parallel zur Drehachse 44 zeilenförmig untereinander angeordnet sind (siehe Fig. 5). Fig. 4 zeigt exemplarisch ein einzelnes Pixel 48, allerdings zu drei verschiedenen, aufeinanderfolgenden Zeitpunkten 48', 48, 48". Infolge der Drehung nimmt das Pixel 48 zu den verschiedenen Zeitpunkten verschiedene Teilabschnitte der Oberfläche 28 auf. Bei Bezugsziffer 48 ist das Pixel zu einem definierten ersten Zeitpunkt und mit dem zu diesem ersten Zeitpunkt erfassten (hier nur symbolisch angedeuteten) Bildinhalt dargestellt. Mit Bezugsziffer 48' ist dasselbe Pixel zu einem früheren Zeitpunkt mit einem früheren Bildinhalt gezeigt. Mit Bezugsziffer 48" ist das Pixel zu einem späteren Zeitpunkt mit einem späteren Bildinhalt gezeigt. Die Kamera 32 besitzt zu jedem Zeitpunkt einen Aufnahmebereich 50, 50' bzw. 50", der jeweils einen Teilabschnitt der Oberfläche 28 erfasst. Mit dem Aufnahmebereich 50' wird also ein erster Teilabschnitt 52 der Oberfläche 28 erfasst. In dem ersten Abschnitt 52 ist hier ein erster Oberflächenpunkt 54 symbolisch als Kreis dargestellt. Zum nächsten Zeitpunkt nimmt das Pixel 48 einen zweiten Teilabschnitt 56 der Oberfläche 28 auf. Der zweite Abschnitt folgt auf Grund der Drehung des Gegenstandes 26 auf den ersten Abschnitt 52. Innerhalb des zweiten Abschnitts 56 ist ein zweiter Oberflächenpunkt 58 symbolisch als Dreieck dargestellt. Mit dem Aufnahmebereich 50" nimmt das Pixel 48 einen dritten Abschnitt 60 der Oberfläche 28 auf, der hier mit einem dritten Oberflächenpunkt 62 dargestellt ist. Der dritte Oberflächenpunkt 62 ist symbolisch als Kreuz dargestellt. Die Abschnitte 52, 56 und 60 werden durch die Bewegung der Oberfläche 28 in Drehrichtung 46 zeitlich nacheinander auf das Pixel 48 abgebildet. In der Darstellung der Fig. 4 erfasst die Zeilenkamera 32 aktuell nur den Teilabschnitt 56 mit dem Oberflächenpunkt 58. Die Aufnahmebereiche 50' und 50" sind daher "dunkel" dargestellt.

Fig. 5 zeigt eine Anzahl von sechs Bildern a) bis f). Die Bilder a) bis f) sind mit der Zeilenkamera 32 aufgenommen, die hier vereinfacht mit fünf Pixeln 48 dargestellt ist. Die fünf Pixel 48 sind in einzigen Pixelzeile 64 vertikal untereinander angeordnet. Die Bilder a) bis zeigen den Aufnahmebereich 50 der Kamera 32 zu unterschiedlichen, aufeinanderfolgenden Zeitpunkten. In allen Bildern a) bis f) erstreckt sich der Aufnahmebereich 50 der Kamera 32 über alle Pixel 48.

Bild a) zeigt den Abschnitt 52 der Oberfläche 28 mit einer Anzahl von Oberflächenpunkten 54, der zu einem ersten Zeitpunkt aufgenommen wurde. Zu diesem ersten Zeitpunkt hat die Steuer- und Auswerteeinheit 34 ein erstes Hell-Dunkel-Muster 16a erzeugt, das auf die Oberflächenpunkte 54 fiel und zusammen mit den Oberflächenpunkten 54 aufgenommen wurde. Bild b) zeigt denselben Abschnitt 52 der Oberfläche 28 wie Bild a), jedoch zu einem späteren Zeitpunkt und mit einem anderen Hell-Dunkel-Muster 16b. Mit anderen Worten wird der Abschnitt 52 der Oberfläche hier mehrfach aufgenommen, wobei jeweils ein anderes Hell-Dunkel-Muster 16a, 16b auf die Oberflächenpunkte 54 fällt. Nach dem neuen Verfahren steuert die Steuer- und Auswerteeinheit die Lichtquellen 12, die Kamera 32 und die Werkstückaufnahme 20 so an, dass die Hell-Dunkel-Muster 16a, 16b schneller wechseln als die Werkstückaufnahme 20 gedreht wird. Die Oberflächenpunkte 54 des Abschnitts 52 werden daher mit den verschiedenen Hell-Dunkel-Muster 16a, 16b direkt nacheinander mehrfach aufgenommen. Bevorzugt entspricht die Anzahl der Bilder von dem Oberflächenabschnitt 52 der Anzahl der verschiedenen Hell-Dunkel-Muster 16a, 16b. In bevorzugten Ausführungsformen wird jeder Oberflächenabschnitt 52 zumindest vier Mal aufgenommen, wobei jedes Bild die Oberflächenpunkte 54 mit einem anderen Hell-Dunkel-Muster 16a, 16b zeigt. Dabei sind die Hell-Dunkel-Muster 16a, 16b strukturell gleich. Der Intensitätsverlauf 22 ist jedoch in jedem der vier Muster 16 um einen definierten Bruchteil der Periode 24 relativ zu den Oberflächenpunkten 54 verschoben. In den bevorzugten Ausführungsformen ist der Intensitätsverlauf 22 jeweils um P/n verschoben, wobei P die Periode und n die Anzahl der Bilder von den Oberflächenpunkten 54 ist. Aus den so erhaltenen Bildern lässt sich für jeden Oberflächenpunkt 54 eine lokale Neigung bestimmen, wie dies in der WO 2009/007129 A1 beschrieben ist. Diese Druckschrift ist hier durch Bezugnahme insoweit aufgenommen.

Die Bilder c) und d) zeigen den nächsten Abschnitt 56 der Oberfläche 28 zu späteren Zeitpunkten, wobei die Oberflächenpunkte 58 hier wieder mit den verschiedenen Hell-Dunkel-Mustern 16a und 16b nacheinander aufgenommen wurden. Die Bilder e) und f) zeigen den dritten Abschnitt 60 mit den Oberflächenpunkten 62 und den verschiedenen Hell-Dunkel-Mustern 16a und 16b.

Die unterschiedlichen Hell-Dunkel-Muster 16, mit denen die Bilder a) und b), c) und d) sowie e) und f) aufgenommen wurden, bilden eine Abfolge von Hell-Dunkel-Mustern 16. Diese Abfolge wird für alle zu inspizierenden Abschnitte 52, 56, 60 der Oberfläche wiederholt. Vorzugsweise wird jeder zu inspizierende Oberflächenabschnitt 52, 56, 60 mit jedem Hell-Dunkel-Muster 16 der Abfolge aufgenommen, wobei jeder Oberflächenabschnitt in den bevorzugten Ausführungsformen nur einmal an der Kamera 32 vorbei bewegt wird, um alle Bilder mit den verschiedenen Hell-Dunkel-Mustern 16 aufzunehmen. In einigen Ausführungsformen kann die Steuer- und Auswerteeinheit 34 die Werkstückaufnahme schrittweise jeweils so ansteuern, dass der Gegenstand 26 beim Aufnehmen der Bilder, d.h. während der Abfolge der Hell-Dunkel-Muster 16, still steht. In diesen Ausfuhrungsformen nimmt der Gegenstand 26 nach jeder Drehung der Werkstückaufnahme 20 eine "Ruheposition" ein, die zumindest so lange beibehalten wird, bis alle Hell-Dunkel-Muster 16 der Abfolge durchlaufen wurden. Dabei befindet sich jeweils ein definierter Oberflächenabschnitt 52, 56, 60 in dem Aufnahmebereich der Kamera und die Kamera nimmt eine Anzahl von Bildern von diesem definierten Oberflächenabschnitt mit den verschiedenen Hell-Dunkel-Mustern 16 auf.

In bevorzugten Ausführungsformen bewegt die Steuer- und Auswerteeinheit 34 die Werkstückaufnahme 20 jedoch weitgehend kontinuierlich. Auch dies kann vorteilhaft mit Hilfe des Schrittmotors 42 erfolgen, indem die Steuer- und Auswerteeinheit 34 den Schrittmotor 42 mit einer gleichmäßigen Pulsfolge mit einem kurzen Puls-Pause-Verhältnis ansteuert. In diesen Ausführungsformen bewegt sich der Gegenstand 26 zwischen und/oder sogar während der einzelnen Bildaufnahmen.

Fig. 6 zeigt eine solche Ausführungsform anhand von weiteren Bildern a) bis f). Die Bilder wurden auch hier mit den wechselnden Hell-Dunkel-Mustern 16a, 16b aufgenommen. Im Gegensatz zu den Bildern in Fig. 5 steht der Gegenstand 26 jedoch beim Aufnehmen der Bilder nicht still. Dies hat zur Folge, dass sich die Bilder a) und b) nicht nur auf Grund des geänderten Hell-Dunkel-Musters 16a/16b unterscheiden, sondern auch in Bezug auf den veränderten Bildinhalt, der eine Folge der Bewegung des Gegenstandes relativ zu der Kamera ist. Wie man anhand Bild b) erkennen kann, ist der Vorschub der Werkstückaufnahme 20 und damit der Vorschub des Oberflächenpunktes 54 infolge der Bewegung so klein, dass der Oberflächenpunkt 54 mit allen erforderlichen Hell-Dunkel-Mustern der Abfolge auf das Pixel 48 abgebildet wird. Gleiches gilt für die Oberflächenpunkte 58 und 60, wie anhand der Bilder c) bis f) dargestellt ist.

In einigen Ausführungsformen kann die Steuer- und Auswerteeinheit die Kamera 32 so ansteuern, dass das Öffnen und Schließen des Verschlusses 33 mit den Vorschubschritten des Schrittmotors 42 synchronisiert ist, so dass der Gegenstand 26 trotz der weitgehend kontinuierlichen Bewegung bei geöffnetem Verschluss 33 im wesentlichen still steht. In anderen Ausführungsformen ist die Belichtungszeit der Kamera 32 jedoch länger als eine etwaige vorhandene "Ruhepause" des Gegenstandes. In diesen Fällen hat die Drehbewegung 46 zur Folge, dass die Bilder a) bis f) mit einer Bewegungsunschärfe aufgenommen werden. Das bedeutet mit anderen Worten, dass die Oberflächenpunkte 52, 58, 62, auf die die Zeilenkamera 32 gerichtet ist, in dem entstehenden Bild etwas "verschmiert" werden. Überraschenderweise hat diese Bewegungsunschärfe jedoch eine vernachlässigbare Wirkung, wenn die Belichtungszeiten kurz sind. Dies ist bei der bevorzugten Vorrichtung prinzipiell der Fall, da die Oberflächenpunkte 54, 58, 62 mit jedem Muster der Musterfolge aufgenommen werden und die Belichtungszeit somit schon aufgrund der schnellen Musterwechsel kurz sein muss.

Alternativ zu einer Drehbewegung kann der Gegenstand mit der zu inspizierenden Oberfläche geradlinig bewegt werden. Daraus ergibt sich die Möglichkeit, einen sich kontinuierlich bewegenden Gegenstand, wie bspw. ein Strangprofil, in der Produktion zu inspizieren, ohne dass der jeweilige Gegenstand für die Inspektion selbst angehalten werden muss. Voraussetzung ist lediglich, dass die Bildaufnahmegeschwindigkeit der Kamera und die Wechselgeschwindigkeit der Muster groß im Vergleich zu der Vorschubgeschwindigkeit des Gegenstandes ist.

## Patentansprüche

1. Vorrichtung zum optischen Inspizieren einer Oberfläche (28) an einem Gegenstand (26), wobei die Oberfläche (28) eine Vielzahl von Oberflächenpunkten (54, 58, 62) besitzt, die entlang einer Richtung (46) verteilt sind, mit
- einem Mustergenerator (12), der dazu ausgebildet ist, variable Hell-Dunkel-Muster (16) zu erzeugen,
- einer Kamera (32) zum Aufnehmen von Bildern (a-f), die jeweils nur einen Teilabschnitt (52, 56, 60) der Oberfläche (28) zeigen,
- einer Werkstückaufnahme (20), die dazu ausgebildet ist, den Gegenstand (26) relativ zu der Kamera (32) in der Richtung (46) zu bewegen, um die Oberflächenpunkte (54, 58, 62) zeitlich nacheinander mit der Kamera (32) zu erfassen, und
- einer Steuer- und Auswerteeinheit (34), die dazu ausgebildet ist, den Mustergenerator (12), die Werkstückaufnahme (20) und die Kamera (32) so anzusteuern, dass jeder Oberflächenpunkt aus der Vielzahl der verteilten Oberflächenpunkte (54, 58, 62) mit einer Vielzahl verschiedener Hell-Dunkel-Muster (16) aufgenommen wird, wobei der Mustergenerator (12) die verschiedenen Hell-Dunkel-Muster (16) in einer zusammenhängenden zeitlichen Abfolge bereitstellt, und wobei die Steuer- und Auswerteeinheit (34) dazu ausgebildet ist, die Werkstückaufnahme (20) kontinuierlich anzusteuern, um den Gegenstand (26) während der Aufnahme der Bilder (a-f) kontinuierlich zu bewegen, so dass sich als Folge der Bewegung des Gegenstandes (26) relativ zu der Kamera (32) die Bilder (a-f) durch die verschiedenen Hell-Dunkel-Muster (16) und ihren Bildinhalt voneinander unterscheiden, wobei die Bewegungsgeschwindigkeit des Gegenstandes (26) klein ist im Vergleich zu der Wechselgeschwindigkeit der Hell-Dunkel-Muster (16) und klein ist im Vergleich mit der Bildaufnahmegeschwindigkeit der Kamera (32),
wobei die Hell-Dunkel-Muster (16a, 16b) jeweils einen Intensitätsverlauf (22) mit einer definierten und jeweils gleichen Periode (24) aufweisen, wobei mindestens drei Hell-Dunkel-Muster (16a, 16b) der Abfolge den gleichen Intensitätsverlauf (22) besitzen, und wobei die drei Hell-Dunkel-Muster (16a, 16b) sich dadurch unterscheiden, dass der Intensitätsverlauf (22) mit jeweils unterschiedlichen Phasenlagen angeordnet ist.

2. Vorrichtung nach Anspruch 1, wobei der Mustergenerator eine Vielzahl von separaten Lichtquellen (12) aufweist, die einzeln oder in kleinen Gruppen ansteuerbar sind.

3. Vorrichtung nach Anspruch 1 oder 2, wobei der Mustergenerator (12) ortsfest angeordnet ist.

4. Vorrichtung nach einem der Ansprüche 1 bis 3, wobei die Kamera (32) ortsfest angeordnet ist.

5. Vorrichtung nach einem der Ansprüche 1 bis 4, wobei die Kamera (32) eine Zeilenkamera (32) ist.

6. Vorrichtung nach einem der Ansprüche 1 bis 5, wobei die Steuer- und Auswerteeinheit (34) dazu ausgebildet ist, eine lokale Oberflächenneigung an dem einem Oberflächenpunkt (54, 58, 62) in Abhängigkeit von den Bildern (a-f) zu bestimmen.

## Claims

1. Apparatus for optically inspecting a surface (28) on an object (26), wherein the surface (28) has a multiplicity of surface points (54, 58, 62) distributed along a direction (46), having
- a pattern generator (12) that is configured to generate variable bright/dark patterns (16),
- a camera (32) for recording images (a-f) that each show only one subsection (52, 56, 60) of the surface (28),
- a workpiece holder (20) that is configured to move the object (26) relative to the camera (32) in the direction (46) in order to temporally successively capture the surface points (54, 58, 62) with the camera (32), and
- a control and evaluation unit (34) that is configured to actuate the pattern generator (12), the workpiece holder (20) and the camera (32) such that each surface point from the multiplicity of distributed surface points (54, 58, 62) is recorded with a multiplicity of different bright/dark patterns (16), wherein the pattern generator (12) makes available the different bright/dark patterns (16) in a continuous temporal sequence, and wherein the control and evaluation unit (34) is configured to actuate the workpiece holder (20) continuously in order to continuously move the object (26) during the recording of the images (a-f), with the result that the images (a-f), as a consequence of the movement of the object (26) relative to the camera (32), differ from one another by way of the different bright/dark patterns (16) and their image content, wherein the movement speed of the object (26) is low compared to the switching speed of the bright/dark patterns (16) and is low compared to the image recording speed of the camera (32),
wherein the bright/dark patterns (16a, 16b) each have an intensity profile (22) having a defined and in each case identical period (24), wherein at least three bright/dark patterns (16a, 16b) from the sequence have the same intensity profile (22), and wherein the three bright/dark patterns (16a, 16b) differ in that the intensity profile (22) is arranged with respectively different phasing.

2. Apparatus according to Claim 1, wherein the pattern generator has a multiplicity of separate light sources (12) that are able to be actuated individually or in small groups.

3. Apparatus according to Claim 1 or 2, wherein the pattern generator (12) is arranged in a locationally fixed manner.

4. Apparatus according to one of Claims 1 to 3, wherein the camera (32) is arranged in a locationally fixed manner.

5. Apparatus according to one of Claims 1 to 4, wherein the camera (32) is a line-scan camera (32).

6. Apparatus according to one of Claims 1 to 5, wherein the control and evaluation unit (34) is configured to determine a local surface inclination at the one surface point (54, 58, 62) in dependence on the images (a-f).

## Revendications

1. Dispositif d'inspection optique d'une surface (28) sur un objet (26), la surface (28) possédant une pluralité de points de surface (54, 58, 62) qui sont distribués le long d'une direction (46), comprenant
- un générateur de motifs (12) qui est configuré pour générer un motif clair-foncé (16) variable,
- une caméra (32) destinée à enregistrer des images (a-f) qui représentent respectivement seulement une portion partielle (52, 56, 60) de la surface (28),
- un logement d'outil (20) qui est configuré pour déplacer l'objet (26) par rapport à la caméra (32) dans la direction (46) afin de capturer les points de surface (54, 58, 62) chronologiquement les uns après les autres avec la caméra (32),
- une unité de commande et d'interprétation (34) qui est configurée pour commander le générateur de motifs (12), le logement d'outil (20) et la caméra (32) de telle sorte que chaque point de surface parmi la pluralité de points de surface (54, 58, 62) distribués est enregistré avec une pluralité de motifs clairs-foncés (16) différents, le générateur de motifs (12) fournissant les différents motifs clairs-foncés (16) dans une séquence temporelle cohérente, et l'unité de commande et d'interprétation (34) étant configurée pour commander continuellement le logement d'outil (20) afin de déplacer continuellement l'objet (26) pendant l'enregistrement des images (a-f), de sorte qu'en conséquence du mouvement de l'objet (26) par rapport à la caméra (32), les images (a-f) se différentient les unes des autres par les motifs clairs-foncés (16) différents et leur contenu d'image, la vitesse de déplacement de l'objet (26) étant petite en comparaison de la vitesse de changement du motif clair-foncé (16) et petite en comparaison de la vitesse d'enregistrement d'image de la caméra (32),
les motifs clairs-foncés (16a, 16b) possédant respectivement une courbe d'intensité (22) ayant une période (24) définie et à chaque fois égale, au moins trois motifs clairs-foncés (16a, 16b) de la séquence possédant la même courbe d'intensité (22) et les trois motifs clairs-foncés (16a, 16b) se différenciant en ce que la courbe d'intensité (22) est respectivement disposée avec des positions de phase différentes.

2. Dispositif selon la revendication 1, le générateur de motifs possédant une pluralité de sources de lumière (12) séparées qui peuvent être commandées individuellement ou en petits groupes.

3. Dispositif selon la revendication 1 ou 2, le générateur de motifs (12) étant disposé en position fixe.

4. Dispositif selon l'une des revendications 1 à 3, la caméra (32) étant disposée en position fixe.

5. Dispositif selon l'une des revendications 1 à 4, la caméra (32) étant une caméra à capteur linéaire (32).

6. Dispositif selon l'une des revendications 1 à 5, l'unité de commande et d'interprétation (34) étant configurée pour déterminer une inclinaison de surface locale au niveau dudit point de surface (54, 58, 62) en fonction des images (a-f).
